# EUROPEAN PATENT APPLICATION

(11) **EP 4 697 462 A1**
(43) Date of publication of application: **18.02.2026**
(21) Application number: 25188196.7
(22) Date of filing: 08.07.2025
(51) Int. Cl.: H01M 50/107, H01M 50/133, H01M 10/54

(54) **CAN FOR RECHARGEABLE BATTERY, RECHARGEABLE BATTERY INCLUDING THE SAME, AND METHOD FOR DISASSEMBLING RECHARGEABLE BATTERY**

(30) Priority: 14.08.2024 KR 20240109325
(71) Applicant: SAMSUNG SDI CO., LTD., Yongin-si, Gyeonggi-do 17084 (KR)
(72) Inventor: KIM, Hyunsoo, Yongin-si, Gyeonggi-do 17084 (KR)
(74) Representative: Marks & Clerk LLP

(57) **Abstract**

A can for a rechargeable battery, including a cylinder with a hollow interior, the cylinder having a bottom portion and a side portion, a first cutting line and a second cutting line on the side portion of the cylinder, a first handle overlapping the first cutting line, the first handle being affixed to the first cutting line, and a second handle adjacent to the second cutting line on the side portion, wherein the first cutting line is along an outer circumference of the cylinder, and the second cutting line is in a direction intersecting the first cutting line.

## Description

### BACKGROUND

### 1. Field

The present disclosure relates to a can for a rechargeable battery, a rechargeable battery including the same, and a method for disassembling a rechargeable battery.

### 2. Description of the Related Art

Rechargeable batteries can be recharged and can be made into small and large capacities, and representative examples include nickel hydrogen batteries, lithium batteries, and lithium-ion batteries.

These rechargeable batteries may be divided into a stacked electrode assembly in which a positive electrode, a separator, and a negative electrode are stacked in sheet form or a wound electrode assembly in which they are wound, and may be divided into pouch-type, cylindrical-type, and square-type batteries according to the case in which the electrode assembly is accommodated.

Among them, the cylindrical rechargeable battery includes a cap assembly in which the wound electrode assembly and an electrolyte are housed together in a cylindrical can, and a gasket is on the can to be insulated.

These rechargeable batteries may be disassembled to determine life-span and electrical characteristics thereof, and sophisticated work for research, development and analysis.

Since the above-described information disclosed in the background art of this disclosure is only intended to enhance understanding of the background of the present disclosure, it may include information that does not constitute conventional art.

### SUMMARY

Embodiments include a can for a rechargeable battery, the can including a cylinder with a hollow interior, the cylinder having a bottom portion and a side portion, a first cutting line and a second cutting line on the side portion of the cylinder, a first handle overlapping the first cutting line, the first handle being affixed to the first cutting line, and a second handle adjacent to the second cutting line on the side portion, wherein the first cutting line is along an outer circumference of the cylinder, and the second cutting line is in a direction intersecting the first cutting line.

The first cutting line and the second cutting line may be portions that are thinner than other portions of the side portion.

The first cutting line and the second cutting line may be grooves on inner or outer sides of the side portion.

The first cutting line may include at least one cutting line.

The second cutting line may have a spiral shape along the outer circumference of the cylinder.

The first handle may include a first portion affixed to the first cutting line and a second portion extending from the first portion, the second portion overlapping the side portion.

The second handle may include a first portion affixed to the side portion and a second portion extending from the first portion, the second portion overlapping the side portion.

The second portion may have a ring shape with a hole in the middle, one side of the second portion having a circular arc.

The second handle may include a first handle portion and a second handle portion on opposite sides of the cylinder.

A length of the first portion of the second handle may be more than 30% of a diameter of the cylinder.

Embodiments include a rechargeable battery, including the can of the present disclosure, an electrode assembly accommodated within the can, and a cap assembly installed in an opening of the can to seal the can.

The can may include a beading portion in which the side portion is concavely deformed toward an inside of the can, and the first cutting line is on the beading portion.

A first portion of the first handle may be on the beading portion, and a second portion of the first handle may be bent from the first portion, a second portion of the first handle being on the side portion.

The first cutting line may be cut from the beading portion by a force pulling the first handle, and the second cutting line may include the side portion cut along the second cutting line by a force pulling the second handle.

The first cutting line may be a closed curved line along the beading portion.

If the first cutting line is completely removed, the cap assembly may be completely separated from the side portion.

Embodiments include a disassembling method of a can for a rechargeable battery, the method including preparing a rechargeable battery including the can for a rechargeable battery of claim 1, lifting the first handle affixed to an outside of the can vertically to an outer surface of the can, moving the first handle along a first cutting line to separate the can into an upper can portion and a lower can portion centered on the first cutting line, lifting the second handle vertically to the outer surface of the can, and pulling the second handle to cut a side portion along the second cutting line.

The disassembling method may further include separating the can into an upper portion and a lower portion, the separating including separating a cap plate of the rechargeable battery from a side portion of the can.

Cutting the side portion of the can may be continuous from the upper can portion to the lower can portion.

The second handle may include a first handle portion and a second handle portion, and wherein cutting the side portion of the can includes pulling the first handle portion and the second handle portion on opposite sides of the can simultaneously in opposite directions.

At least some of the above and other features of the invention are set out in the claims.

### BRIEF DESCRIPTION OF THE DRAWINGS

Features will become apparent to those of ordinary skill in the art by describing in detail embodiments with reference to the attached drawings, in which:
FIG. 1 is a schematic perspective view of a can for a rechargeable battery according to one or more embodiments;
FIG. 2 is a schematic perspective view of a rechargeable battery according to one or more embodiments;
FIG. 3 is a schematic cross-sectional view of the rechargeable battery illustrated in FIG. 2;
FIG. 4 is a top plan view of the can shown in FIG. 2;
FIG. 5 is a cross-sectional view taken along a line V-V' of FIG. 4;
FIG. 6 is a cross-sectional view showing a first cut portion or cutting line according to another embodiment;
FIG. 7 is a top plan view illustrating a first cut portion or cutting line according to another embodiment;
FIG. 8 is a cross-sectional view taken along a line VIII-VIII' of FIG. 4;
FIG. 9 is a cross-sectional view of a second cut portion or cutting line according to another embodiment;
FIG. 10 is a perspective view of a can showing a second cut portion or cutting line according to another embodiment;
FIG. 11 to FIG. 18 are views explaining a method of disassembling a rechargeable battery according to one or more embodiments of the present disclosure;
FIG. 19 is a schematic perspective view of another rechargeable battery according to another embodiment; and
FIG. 20 is a schematic cross-sectional view of the rechargeable battery illustrated in FIG. 19.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

**In** the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. **In** addition, it will also be understood that when a layer is referred to as being "between" two layers, it can be the only layer between the two layers, or one or more intervening layers may also be present. Like reference numerals refer to like elements throughout.

The terms or words used in the present specification and claims are not to be limitedly interpreted as general or dictionary meanings and should be interpreted as meanings and concepts that are consistent with the technical idea of the present disclosure on the basis of the principle that an inventor may appropriately define concepts of terms to describe his/her embodiments in the best way. The embodiments described in this specification and the configurations shown in the drawings are only some of the embodiments of the present disclosure and do not represent all of the technical aspects and features of the present disclosure. Accordingly, it should be understood that various equivalents and modifications may replace or modify the embodiments described herein at the time of filing this application.

It should be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Although "first," "second," etc. are used to describe various configurations, these components are not limited by these terms. These terms are only used to distinguish one component from another, and unless otherwise stated, a first component may also be a second component.

Throughout the specification, unless otherwise stated, each element may be singular or plural.

Spatially relative terms, such as "beneath," "below," "lower," "above," "upper," and the like, may be used herein for ease of description to describe one element or feature's relationship to another element(s) or feature(s) as illustrated in the figures. It should be understood that such spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

It should be understood that when an element or layer is referred to as being "on," "connected to," or "coupled to" another element or layer, it may be directly on, connected, or coupled to the other element or layer or one or more intervening elements or layers may also be present.

The terminology used in this specification is intended to describe embodiments of the present disclosure and is not intended to limit the present disclosure.

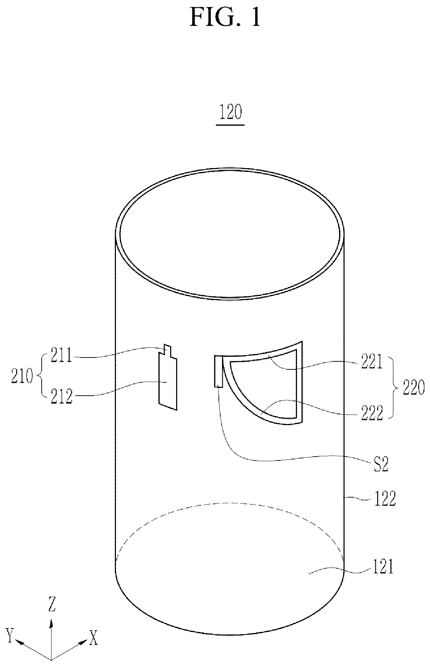

FIG. 1 is a schematic perspective view of a can for a rechargeable battery according to one or more embodiments.

As shown in FIG. 1, a can 120 for a rechargeable battery according to one or more embodiments may have a circular bottom portion 121 and a side portion 122, which may be a cylinder having one side open.

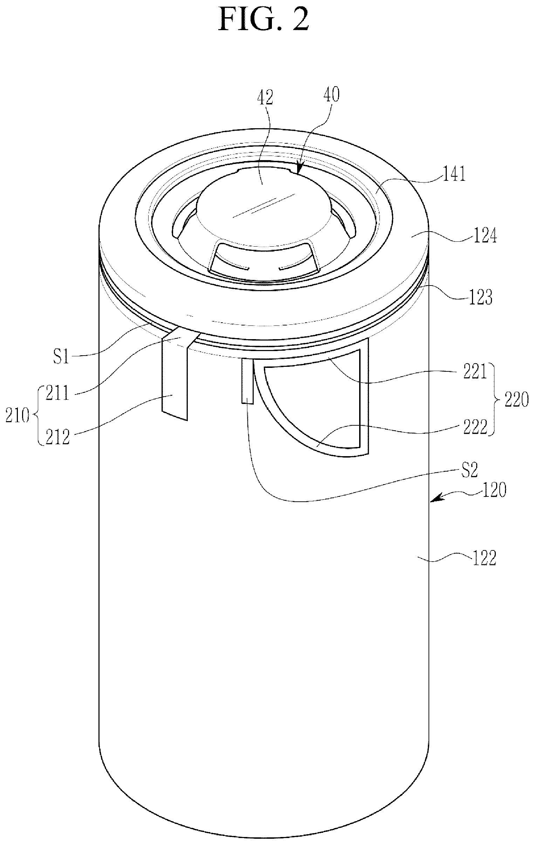

The cylinder side portion 122 may be formed with a first cutting line S1 (see FIG. 2) and a second cutting line S2, a first handle 210 overlapping the first cutting line S1 and affixed to the first cutting line S1, and a second handle 220 adjacent to the second cutting line S2 and positioned in the side portion 122.

The first cutting line S1 may be formed along the outer circumference of the cylinder, and the second cutting line S2 may be formed in a direction intersecting the first cutting line S1 (e.g., perpendicularly). That is, the first cutting line S1 is the circumference direction of the cylinder, the second cutting line S2 is the height direction of the can 120 (in the orientation shown in FIG. 2), and when the second cutting line S2 is extended in the direction of (e.g., toward) the first cutting line S1, the second cutting line S2 may cross the first cutting line S1. However, the first cutting line S1 and the second cutting line S2 may intersect at various angles.

The can 120 may be composed of steel, steel alloy, aluminum, and aluminum alloy.

The first cutting line S1 and the second cutting line S2 are portions that are thinner than other portions of the side portion 122, and may be grooves formed on the inner or outer side of the side portion.

The above can may be used as a case to accommodate the electrode assembly of the rechargeable battery, and this is specifically explained with reference to the accompanying drawings.

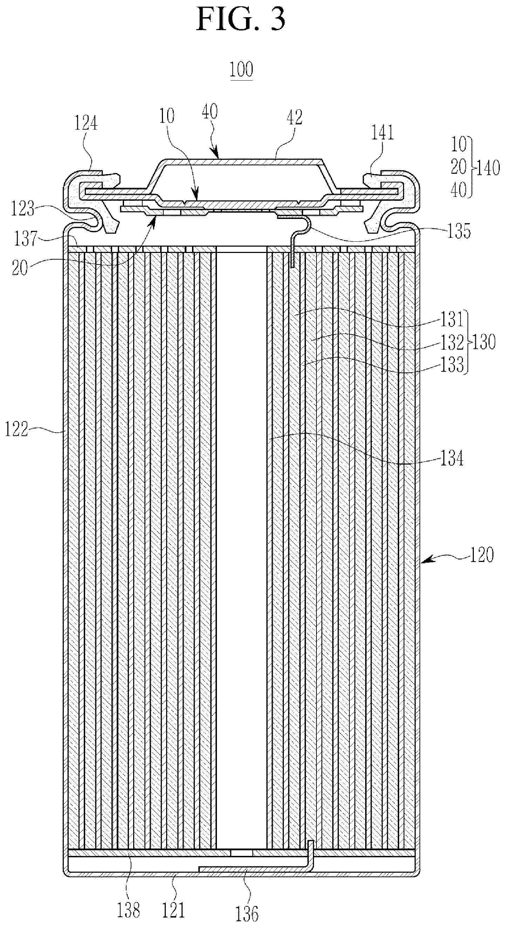

FIG. 2 is a schematic perspective view of a rechargeable battery according to one or more embodiments. FIG. 3 is a schematic cross-sectional view of the rechargeable battery illustrated in FIG. 2.

As shown in FIG. 2 and FIG. 3, the rechargeable battery 100 according to one or more embodiments includes a case including the can 120, a cap assembly 140 assembled into the opening of the can 120 and sealing the can 120, and an electrode assembly 130 sealed inside the case together with an electrolyte.

The can 120 according to the present embodiment may be a cylindrical can as illustrated in FIG. 1.

A beading portion 123 and a crimping portion 124 may be positioned on the side portion 122 of the can 120. The beading portion 123 is a part where the side portion 122 is concavely deformed toward the inside of the can 120, and the crimping portion 124 is a part where the edge including the end portion of the side portion 122 is concavely deformed toward the inside. The electrode assembly 130 accommodated within may be suppressed from movement by the beading portion 123, and the cap assembly 140 may be affixed to the can 120 by the crimping portion 124.

The can for a rechargeable battery according to one or more embodiments may be provided with a cutting line and a handle for easy disassembly, which will be described in detail with reference to the drawings.

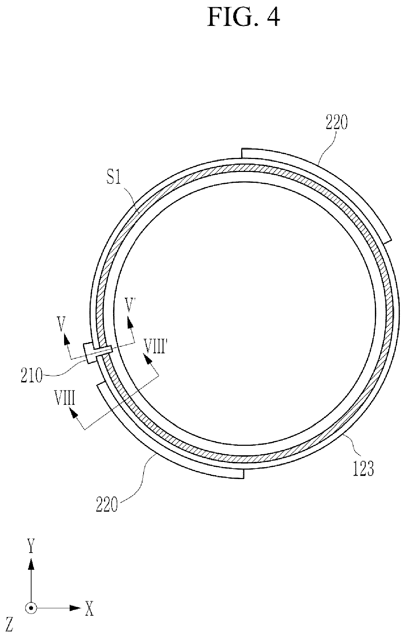

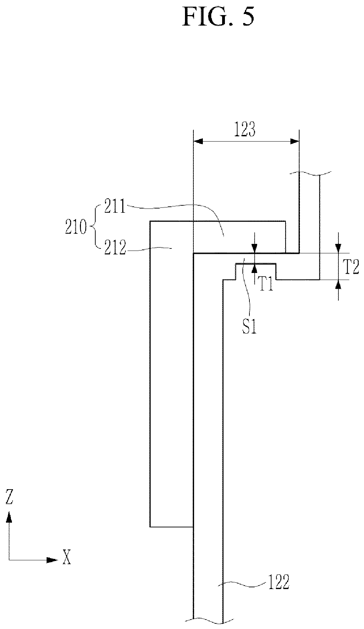

FIG. 4 is a top plan view of the can shown in FIG. 2. FIG. 5 is a cross-sectional view taken along a line V-V' of FIG. 4.

Referring to FIG. 4 and FIG. 5, on the beading portion 123, a first cutting line S1 is formed along the beading portion 123.

The first cutting line S1 may be formed to separate the rechargeable battery into an upper cap assembly 140 and a lower can 120. As shown in FIG. 5, the thickness T1 (e.g., along the Z-axis direction) of the first cutting line S1 may be formed thinner than the thickness T2 of the metal plate forming the can 120.

The first handle 210 may be connected to the first cutting line S1, and the first handle 210 may be affixed to the first cutting line S1 by welding. Cutting may begin from the point where the first handle 210 is positioned. The first cutting line S1 is formed along the beading section, so that a closed curved line may be formed where the beginning and the end are connected.

When only one first cutting line S1 is formed, a groove is formed inside the can 120 to easily affix the first handle 210 to the first cutting line S1, so that the first handle 210 may be affixed to the outer flat surface extending from the side part.

Conversely, a groove may be formed on the outside of the can 120, and if the groove is formed on the outside, the groove may be positioned on the surface where the first handle 210 is affixed, making welding difficult. Accordingly, when the groove is formed on the outside, the width of the groove is formed wider than when the groove is formed on the inside to secure an area for affixing the handle 210, so that the bottom of the groove and the handle 210 are welded. The first handle 210 is affixed to the bottom of the groove which is the first cutting line S1, so that when the first handle 210 is pulled, the first cutting line S1 which has the thinner thickness can be easily cut or pulled off and removed.

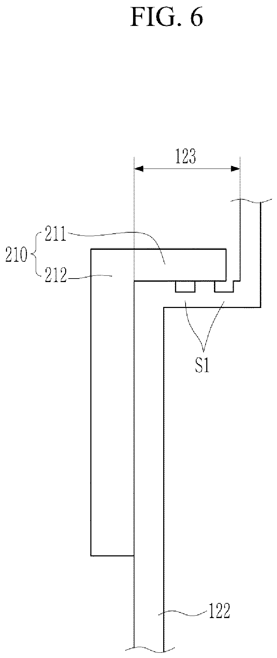

FIG. 6 is a cross-sectional view illustrating a first cut portion or cutting line S1 according to another embodiment.

FIG. 4 and FIG. 5 illustrate that there is one first cutting line S1, but the number of first cut portions or cutting lines may vary, and two or more first cut portions or cutting lines S1 may be formed in the beading portion 123 as shown in FIG. 6.

As shown in FIG. 6, when the first cutting line S1 is formed in plurality, they can be formed in parallel at regular intervals.

Since the first cutting line S1 is thinner than other portions, the thickness between two adjacent first cut portions or cutting lines S1 may be thicker than that of the first cutting line S1, resulting in a protruded shape. At this time, the first handle 210 may be affixed by welding to the protruded portion between the first cut portions or cutting lines S1.

Additionally, the first cutting line S1 may have multiple grooves formed inside the can 120. As shown in FIG. 5, when the groove is formed inside, the first handle S1 may be welded to the portion corresponding to the first cutting line S1 regardless of whether the protruding portion is present.

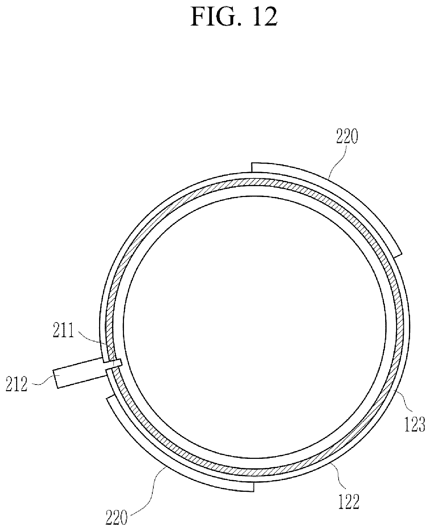

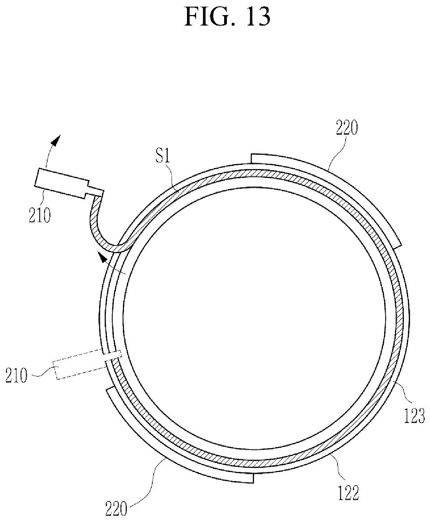

Again, referring to FIG. 4 and FIG. 5, the first handle 210 includes a first portion 211 affixed to the first cutting line S1 and a second portion 212 bent from the first portion 211 and positioned on the side portion 122 of the can 120. The second portion 212 is not affixed to the side portion 122 of the can 120, so that the operator may, if necessary, tilt the second portion 212 outward from the can 120 to be used as a handle (referring to FIG. 12 and FIG. 13).

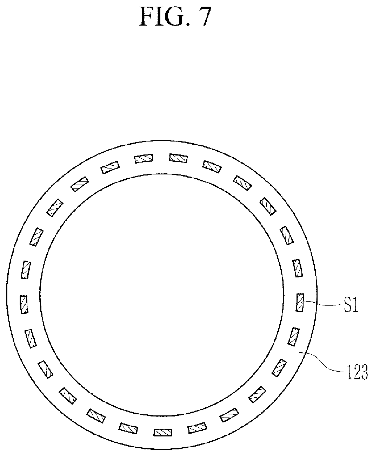

FIG. 7 is a top plan view illustrating a first cut portion or cutting line S1 according to another embodiment.

As shown in FIG. 4, the first cutting line S1 may be formed continuously along the circumference of the beading portion 123, but as shown in FIG. 7, may be formed discontinuously at regular intervals. The beginning and end portions of the first cutting line S1 may be connected, but in other embodiments, may be spaced apart from each other. At this time, the first handle 210 may be affixed at the beginning portion. The minimum gap is left between the two ends of the first cutting line S1 so that the part left between the ends may be connected to the first cutting line S1 and cut apart together.

When the first cutting line S1 is cut, the cap assembly 140 is separated from the can 120. At this time, the crimping portion of the can (124, referring to FIG. 2) that is affixed together with the gasket to the edge of the cap assembly 140 is separated.

Again, referring to FIG. 2, a second cutting line S2 may be formed on the side portion 122 of the can 120.

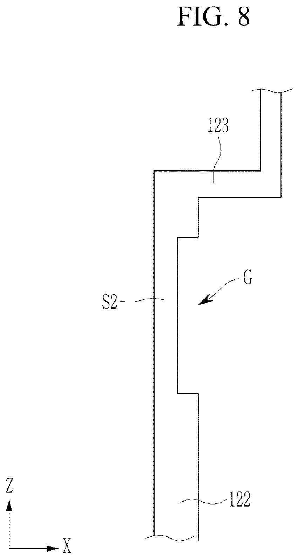

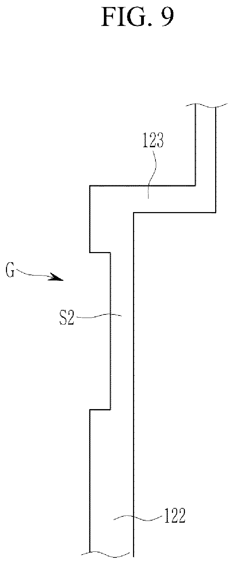

FIG. 8 is a cross-sectional view taken along a line VIII-VIII' of FIG. 4. FIG. 9 is a cross-sectional view of a second cut portion or cutting line S2 according to another embodiment.

Referring to FIG. 8, the second cutting line S2 may be a thinner portion than other portions, like the first cutting line S1. That is, the second cutting line S2 may be a portion having a thin thickness due to the groove G formed on the inner side of the side portion 122 as shown in FIG. 8, and may be a portion having a thin thickness due to the groove formed on the outer side of the side portion 122 as shown in FIG. 9.

The second cutting line S2 may be formed along the height direction of the can 120, and may be formed vertically with respect to an imaginary vertical line perpendicular to the bottom portion 121 of the can 120, but may be inclined with respect to the vertical line so that the force applied through the second handle may be well transmitted. That is, the second cutting line S2 may be formed in a direction in such a way that the can 120 may be easily disassembled through the second cutting line S2.

The second cutting line S2 induces a cutting direction of the can 120 when disassembling the rechargeable battery, so that it is cut quickly. Since the can 120 may be cut continuously even with a small force once the cutting direction is determined, the second cutting line S2 may be formed with a relatively short length, as shown in FIG. 1. For example, the second cutting line S2 is shorter the second portion 212 of the first handle 210.

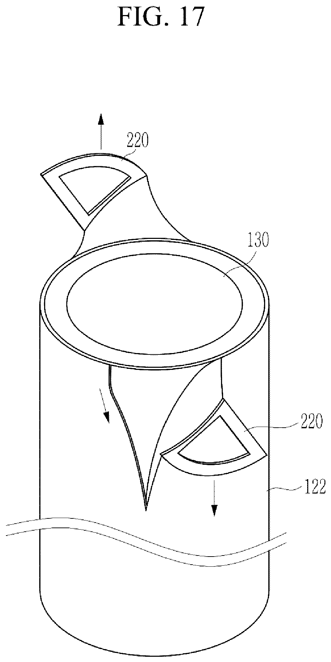

If the length of the second cutting line S2 is short, the cutting edge may not be constant and may be formed irregularly depending on the direction of the applied force (referring to FIG. 17).

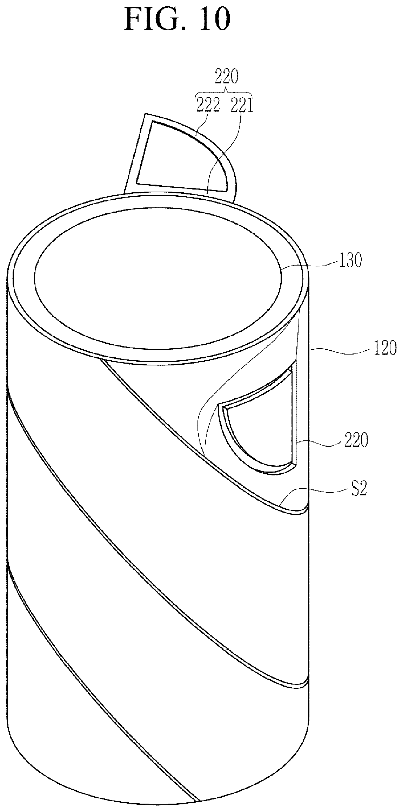

FIG. 10 is a perspective view of a can showing a second cut portion or cutting line S2 according to another embodiment.

As shown in FIG. 10, the second cutting line S2 may be formed continuously from the upper portion to the lower portion along the circumference of the cylindrical can, and may form a spiral structure surrounding the cylindrical can, and the can may be cut along the second cutting line S2.

For better understanding and ease of description, it has been stated that the groove is formed on the outside of the can, but in other embodiments, the second cutting line S2 may have a shape in which the groove is formed on the inside of the can.

Again, referring to FIGS. 2 and 4, the second handle 220 may be affixed by welding to one side of the second cutting line S2. The second handle 220 may be affixed to the side portion 122 of the can 120 adjacent to the beading portion 123, and may be affixed immediately adjacent to the second cutting line S2 so that the second cutting line S2 may be easily cut even with a small force. When disassembling the rechargeable battery, the operator may use the second handle 220 as a handle by tilting it outward from the can 120.

As shown in FIG. 10, the second handle 220 may be positioned 180 degrees opposite to the can 120. The second handle 220 has a ring structure and has a second portion 222 that extends from a first portion, the first portion 221 being affixed to the can 120, and one part 222 of the second portion may form a circular arc so that the operator can easily apply a force.

The length of the first portion of the second handle may be greater than 30% of the cylinder diameter.

The second handle 220 may be ring-shaped to facilitate the transmission of the operator's force, but in other embodiments, may be plate-shaped without holes formed therein. In addition, the second handle is shown as being a one-sided arc, but any structure that the operator can easily grasp and transmit force to, such as a triangle or quadrangle, will suffice.

Hereinafter, a method for disassembling the rechargeable battery as shown in FIG. 2 is specifically described with reference to the drawings.

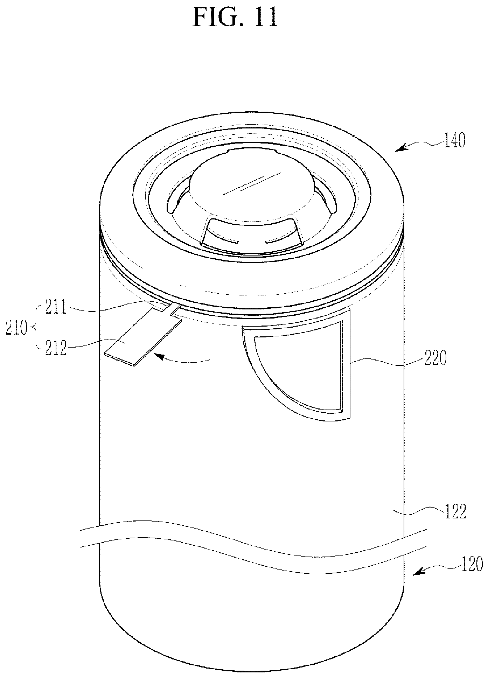

FIG. 11 to FIG. 18 are views illustrating a method of disassembling a rechargeable battery according to the present disclosure.

First, a rechargeable battery to be disassembled is prepared, as shown in FIG. 2.

Next, as shown in FIG. 11 and FIG. 12, the second portion 212 of the first handle 210 affixed to the outside is lifted from the side portion 122 of the can and tilted approximately vertically (e.g., about a 90 degree angle) with respect to the side portion 122 of the can.

Next, as shown in FIG. 13, when the first handle 210 is pulled in the direction in which the first cutting line S1 is formed, the first cutting line S1, which is thinner than other portions, is cut from the side portion 122 of the can along the first handle 210.

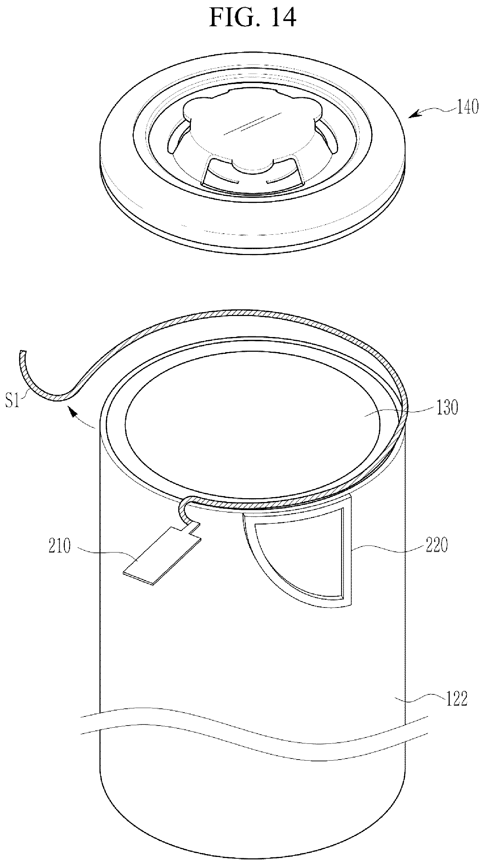

As shown in FIG. 14, when the first cutting line S1 formed over the entire beading portion 123 is continuously cut, the lower can 120 and the upper cap assembly 140 are completely separated.

For example, the first cutting line S1 may be part of the can 120 that has been thinned to be breakable, resulting in separation of the cap assembly and the lower can (see FIG. 5), when pulling on attached portion 211 of the first handle 210 (see FIG. 14).

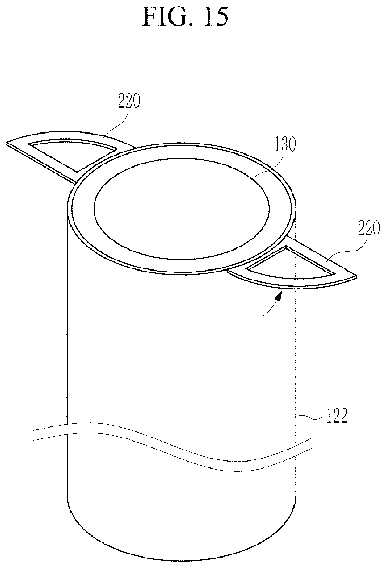

Thereafter, as shown in FIG. 15, the second handle 220 (herein two thereof) is lifted from the side portion 122 of the can and tilted approximately vertically with respect to the side portion 122 of the can.

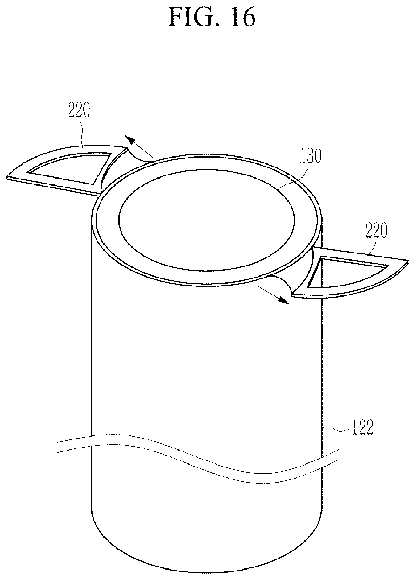

Then, as shown in FIG. 16, the second handle 220 (see arrows) is pulled to cut the second cutting line S2.

The second cutting line S2 is intended to guide the direction in which the can 120 is cut. If the second handle 220 is continuously pulled, even if the second cutting line S2 is formed short, the can may continue to be cut along the direction in which it was started to be cut by the second cutting line S2, as shown in FIG. 17.

For example, the second cutting line S2 may be also a thinned part of the can 120 intended to be breakable when pulling down on handle 220 to effectively peel away the side portion 122 of the can (see FIG. 17).

At this time, if the worker's finger is put on the circular arc part and pulls it, even if a small amount of force is applied, the force is concentrated in the center of the circular arc, thereby easily cutting off the second cutting line S2.

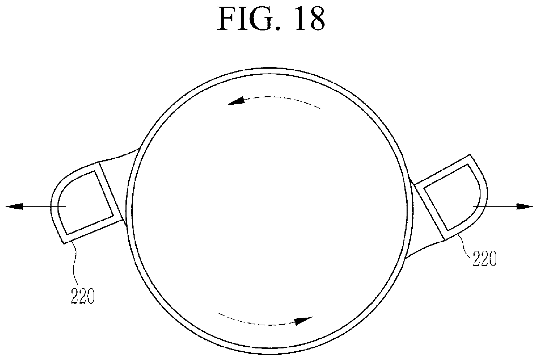

In addition, in one or more embodiments, by forming the second handle (e.g. rotationally) symmetrically on the opposite side with respect to the can, as shown in FIG. 18, when the second handle is pulled with almost the same force, the force applied to the can is balanced, so that the can may be easily disassembled without having to hold the can to prevent it from being moved.

Meanwhile, the second cutting line S2 may be formed continuously to the lower portion of the can so that the can 120 may be completely disassembled, as shown in FIG. 10, and the second cutting line S2 may have a spiral structure (e.g. two or more spirals - e.g. one for each handle).

In this way, by forming the first cut portion or cutting line and the second cut portion or cutting line as in one or more embodiments, the rechargeable battery may be easily disassembled.

Again, referring to FIG. 2 and FIG. 3, the electrode assembly 130 may include a positive electrode 131, a negative electrode 132, and a separator 133. The positive electrode 131 may include a positive electrode substrate and a positive active material layer positioned on the positive electrode substrate. The negative electrode 132 may include a negative electrode substrate and a negative active material layer positioned on the negative electrode substrate. The separator 133 is positioned between the positive electrode 131 and the negative electrode 132, and insulates the positive electrode 131 and the negative electrode 132 while allowing the movement of lithium ions.

The positive electrode substrate may include an aluminum foil, and the positive active material layer may include a transition metal oxide such as LiCoO₂, LiNiO₂, and LiMn₂O₄. The negative electrode substrate may include a copper foil or a nickel foil, and the negative active material layer may include a carbon-based material such as graphite. The separator 133 may include polyethylene, polypropylene, or the like.

The positive electrode 131, the negative electrode 132, and the separator 133 may be wound in an approximately circular cylinder shape, and a center pin 134 of a cylinder shape may be positioned at the center of the electrode assembly 130. The center pin 134 may suppress the deformation of the electrode assembly 130 during the charging and discharging process of the rechargeable battery 100, and may act as a passage for a gas generated inside the rechargeable battery 100. The center pin 134 may be omitted in some cases.

The positive electrode 131 may include a positive electrode tab 135 affixed to the positive electrode substrate, and the negative electrode 132 may include a negative electrode tab 136 incorporated into the negative electrode substrate. The positive electrode tab 135 and the negative electrode tab 136 may be positioned opposite each other. For example, the positive electrode tab 135 may be positioned on one side (the upper side) of the electrode assembly 130 facing the cap assembly 140 and may be affixed to the cap assembly 140. The negative electrode tab 136 may be positioned on one side (the lower side) of the electrode assembly 130 facing the bottom portion 121 of the can 120 and may be affixed to the bottom portion 121.

A first insulating plate 137 may be positioned between the electrode assembly 130 and the cap assembly 140, and a second insulating plate 138 may be positioned between the electrode assembly 130 and the bottom portion 121 of the can 120. The first insulating plate 137 prevents the negative electrode 132 of the electrode assembly 130 from being in contact with the cap assembly 140, and the second insulating plate 138 prevents the positive electrode 131 of the electrode assembly 130 from being in contact with the can 120.

The first insulating plate 137 may have a hole for communicating with the inside of the center pin 134, a hole for passing the positive electrode tab 135, and a plurality of holes for electrolyte injection. The second insulating plate 138 may have a hole positioned to communicate with the inside of the center pin 134 and a hole for passing the negative electrode tab 136.

The positive electrode tab 135 of the electrode assembly 130 may be affixed to one surface (the bottom surface) of a cap-down 20, and the cap-down 20, a safety vent 10, and a cap-up 40 may be charged with the positive electrode. The terminal portion 42 of the cap-up 40 may function as a positive electrode terminal that is in contact with an external device and allows the current to flow to an external device. The can 120 to which the negative electrode tab 136 is affixed may be charged as a negative electrode, and the bottom portion 121 of the can 120 may function as a negative terminal.

The cap assembly 140 of the above-described configuration may be connected to the side portion 122 of the can 120 via an insulating gasket 141. The insulating gasket 141 surrounds the edge of the safety vent 10 and the cap-up 40 and may be crimped between the beading portion 123 and the crimping portion 124 of the can 120.

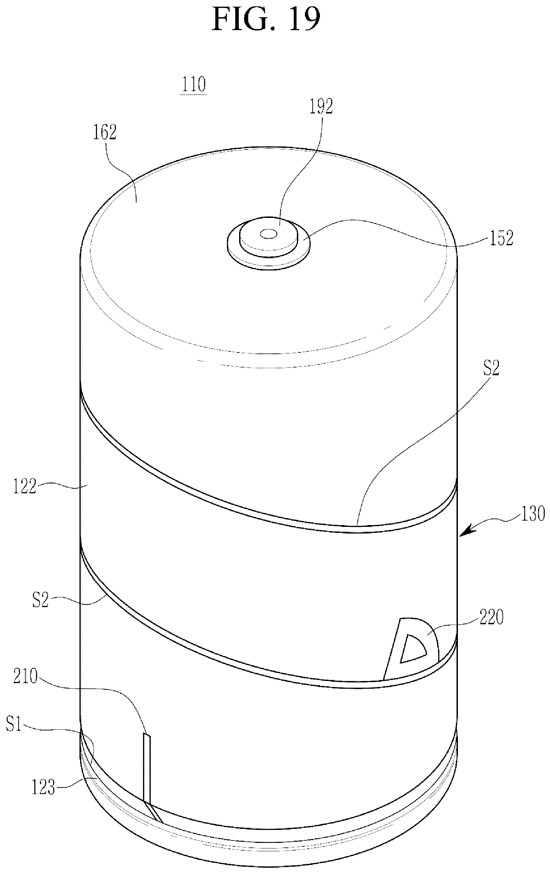

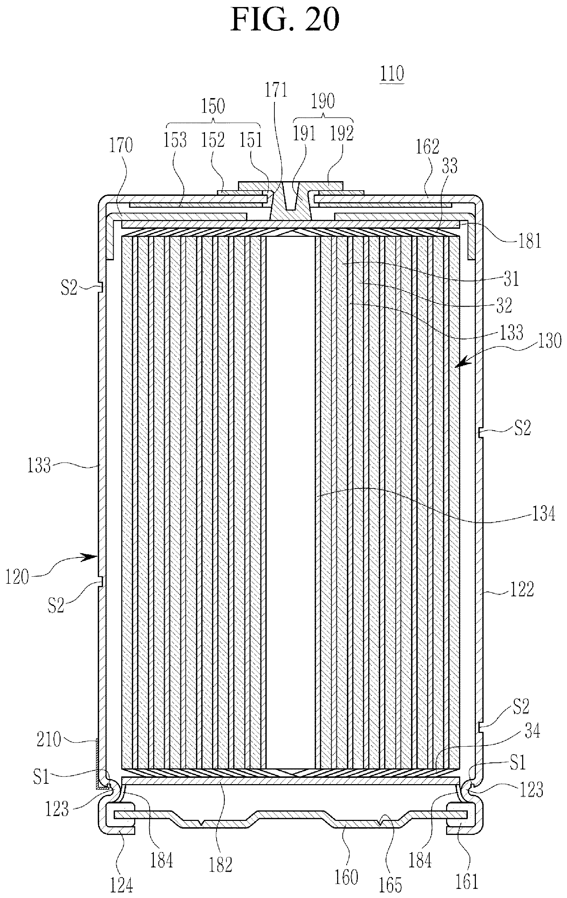

FIG. 19 is a perspective view of a rechargeable battery according to another embodiment. FIG. 20 is a cross-sectional view of the rechargeable battery illustrated in FIG. 19.

Most of FIG. 19 and FIG. 20 are the same as FIG. 1 to FIG. 18, so only the differences will be specifically described.

Referring to FIG. 19 and FIG. 20, the rechargeable battery 110 includes an electrode assembly 120, a can 120 accommodating the electrode assembly 120 therein, a rivet terminal 190 installed in a terminal hole 171 of the can 120, and an insulator 150 positioned between the can 120 and the rivet terminal 190.

The rechargeable battery 100 may include a cap plate 160 coupled to the end of the can 120 to seal the can 120.

The electrode assembly 130 includes the positive electrode, the negative electrode, and the separator, and is housed inside the can 120 together with the electrolyte. The positive electrode, the negative electrode, and the separator may each be configured in a long strip shape and wound in a circular shape around the center pin 134.

The positive electrode and the negative electrode each include a substrate, an electrode coated region 31 and 32 including an active material layer formed on the substrate, and electrode uncoated regions 33 and 34 that do not include an active material layer and have an exposed substrate, respectively.

The electrode uncoated regions 33 and 34 may be bent toward the center pin 134, and the electrode uncoated regions that overlap while being wound may be electrically connected by welding, etc.

The can 120 may be opened on one side (the bottom) to accommodate the electrode assembly 130, the first current collecting plate 181, and the second current collecting plate 182. The can 120 may include a top portion 162 (in the orientation shown) and a side portion 122 connected to the edge of the top portion 162. The top portion 162 may be referred to as a bottom portion when the top and bottom portions of the rechargeable battery are switched.

The can 120 is made of the same material as the can in FIG. 3 and may be cylindrical. A first cutting line S1 and a second cutting line S2 may be formed in the side portion 122 of the can 120. The first handle 210 overlapping the first cutting line S1 is affixed to the first cutting line S1. Also, the second handle 220 adjacent to the second cutting line S2 may be affixed to the side portion 122.

The first cutting line S1 may be formed along the outer circumference of the can, and the second cutting line S2 may be formed in a spiral shape along the outer circumference of the can. Of course, as shown in FIG. 2, it may be formed short in a direction intersecting the first cutting line S1.

The first cutting line S1 and the second cutting line S2 are thinner portions than other portions of the side portion 122, and may be grooves formed on the inner or outer side of the side portion.

Unlike in FIG. 1, the first cutting line S1 may be positioned at the bottom of the can because the cap assembly is positioned at the bottom of the can unlike in FIG. 1. Therefore, the first cutting line S1 may be formed along the beading portion 123 positioned at the bottom of the can.

The first handle 210 may be connected to the first cutting line S1 by welding, and cutting may start from the point where the first handle 210 is positioned. The first cut portion or cutting line S1 may be a curved line of a connected beginning and an end, but in other embodiments, as shown in FIG. 6, may be formed discontinuously.

The second cutting line S2 may be a thinner portion than other portions, like the first cutting line S1, and may be a groove formed on the inner or outer side of the side portion.

The second cutting line S2 may be formed in a spiral shape along the outer circumference of the can, but in other embodiments, may be formed along the height direction of the can 120. That is, it may be formed vertically with respect to a virtual vertical line perpendicular to the cap plate of the can 120, but in other embodiments, may be inclined with respect to the vertical line so that the force applied through the second handle 220 may be well transmitted. That is, the second cutting line S2 may be formed in a direction in which the can 120 may be easily disassembled through the second cutting line S2.

The second cutting line S2 induces a cutting direction of the can 120 when disassembling the rechargeable battery, so that it may be cut quickly. Therefore, the can may be cut continuously by forming a spiral shape along the outer circumference of the can. Since the can 120 may be cut continuously even with a small force once the cutting direction is determined, as shown in FIG. 2, the second cutting line S2 may have a short length.

The second handle 220 may be affixed to one side of the second cutting line S2 by welding. The second handle 220 may be affixed to the side portion 122 of the can 120 adjacent to the beading portion 123, and may be affixed immediately adjacent to the second cutting line S2 so that the second cutting line S2 may be easily cut even with a small force. When disassembling the rechargeable battery, the operator may use the second handle 220 as a handle by tilting it outward from the can 120.

The second handle 220 may be positioned 180 degrees opposite to the can 120. The second handle 220 has a ring structure and has a second portion 222 that extends from the first portion 221, the first portion 221 being affixed to the can 120, and one part 222 of the second portion may form a circular arc so that the operator may easily apply a force.

The length of the first portion of the second handle may be greater than 30% of the cylinder diameter.

The second handle 220 may be ring-shaped to facilitate the transmission of the operator's force, but in other embodiments, may be plate-shaped without holes formed therein. In addition, the second handle is shown as being a one-sided arc, but any structure to which the operator may easily grasp and transmit force, such as a triangle or quadrangle, will suffice.

The terminal hole 171 may be positioned in the center of the top portion 162, and the rivet terminal 190 may be installed in the terminal hole 171 via the insulator 150. The rivet terminal 190 may be coupled with the first current collecting plate 181, and the rivet terminal 190 may be charged with the same polarity as the positive electrode by the first current collecting plate 181 being electrically connected to the electrode uncoated region 33 of the positive electrode, so that it may function as a positive electrode terminal.

The rivet terminal 190 is inserted into the terminal hole 171 while surrounded by the insulator 150. The insulator 150 insulates the rivet terminal 190 and the top portion 162 of the can, and seals the terminal hole 171 to prevent leakage of the electrolyte. An additional insulating member 170 may be arranged on one surface of the first current collecting plate 181 facing the top portion 162.

The cap plate 160 may be positioned on the outer side (the lower side) of the second current collecting plate 182, and may be connected to the lower end of the side portion 122 via the insulating gasket 161. A notch groove 165 may be positioned on the interior surface of the cap plate 160. The notch groove 165 may be thinner than other portions and may have a circular arc shape in a plan view (when viewing an object from above).

When the internal pressure of the rechargeable battery increases, the cap plate 160 may break around the notch groove 165, thereby releasing an internal gas.

The beading portion 123 and the crimping portion 124 may be positioned in the side portion 122. The beading portion 123 may be a portion in which a part of the side portion 122 is concavely deformed toward the inside of the can 120, and the crimping portion 124 may be a portion in which the end of the side portion 122 is vertically bent toward the inside of the side portion 122.

The motion of the electrode assembly can be suppressed inside the can 120 by the beading portion 123, and the edges of the insulating gasket 161 and the cap plate 160 may be crimped between the beading portion 123 and the crimping portion 124.

Meanwhile, the second current collecting plate 182 may include a conductive part 184 that is in close contact with the interior surface of the side portion 122 of the can. The conductive part 184 may be provided in plurality along the edge of the second current collecting plate 182. The can 120 may be charged with the same polarity as the negative electrode by the second current collecting plate 182 and the conductive part 184 electrically connected to the electrode uncoated region 34, so that it may function as a negative terminal.

The rivet terminal 190 includes a pillar portion 191 penetrating the terminal hole 171 and a head portion 192 connected to the pillar portion 191 and positioned on the outside (the upper side in the orientation shown) of the top portion 162. The pillar portion 191 and the head portion 192 may be manufactured as one piece, and the pillar portion 191 may enter from the outside to the inside of the top portion 162 and be fitted into the terminal hole 171.

The rivet terminal 190 is charged as a positive electrode, and the can 120 is charged as a negative electrode, so they have opposite polarities and need to be insulated from each other. Therefore, the insulator 150 may be positioned between the rivet terminal 190 and the can 120.

The insulator 150 may be manufactured in three separate pieces corresponding to a middle portion 151, an outer portion 152, and an inner portion 153, and the three pieces may be integrally combined during the assembly process of the rechargeable battery. The middle portion 151 is in contact with the pillar portion 191 and is fitted into the terminal hole 171. The outer portion 152 is positioned between the outer surfaces of the head portion 142 and the top portion 162, and may be in close contact with the outer surfaces of the head portion 142 and the top portion 162. The inner portion 153 may be positioned in close contact with the inner surface of the top portion 162. The middle portion 151 may be in contact with the outer portion 152 and the inner portion 153 and may be connected as one body.

The outer portion 152 and the inner portion 153 may be configured in a disc shape with a hole in the center. The inner portion 153 may function to prevent the first current collecting plate 181 from being in direct contact with the can 120.

Since the can for a rechargeable battery is made of a solid metal, the dismantling work traditionally involves the operator using nippers to cut the upper end of the can and then decompose the electrode roll, which is inconvenient and increases the risk of explosion in the event of a short with the cap assembly. The present invention provides a simpler construction for dismantling a rechargeable battery.

In addition, in order to perform an effective electrode plate analysis, the time required for the disassembly is minimized and the time that the plate is exposed to the outside is minimized.

The present disclosure provides a can for a rechargeable battery that enables easy and quick disassembly for reasons such as electrode plate analysis, a rechargeable battery including the can, and a method for disassembling a rechargeable battery.

According to the present disclosure, disassembly of the rechargeable battery may be easily and quickly performed using the handle and the cutting line, thereby minimizing the time required for the disassembling, and effectively conducting an electrode plate analysis by minimizing the time that the electrode plate is exposed to the outside.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

Example embodiments have been disclosed herein, and although specific terms are employed, they are used and are to be interpreted in a generic and descriptive sense only and not for purpose of limitation. **In** some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

**<Description of symbols>**

| | | | |
|---|---|---|---|
| 100, 110: | rechargeable battery | 120: | can |
| 121: | bottom portion | 122: | side portion |
| 123: | beading portion | 124: | crimping portion |
| 130: | electrode assembly | 131: | positive electrode |
| 132: | negative electrode | 133: | separator |
| 134: | center pin | 140: | cap assembly |
| 150: | insulator | 160: | cap plate |
| 161: | insulating gasket | 165: | notch groove |
| 171: | through hole | 181: | first current collecting plate |
| 182: | second current collecting plate | 184: | conductive part |
| 210: | first handle | 220: | second handle |

## Claims

1. A can for a rechargeable battery, comprising:
a cylinder with a hollow interior, the cylinder having a bottom portion and a side portion;
a first cutting line and a second cutting line on the side portion of the cylinder,
a first handle overlapping the first cutting line, the first handle being affixed to the first cutting line; and
a second handle adjacent to the second cutting line on the side portion, wherein:
the first cutting line is along an outer circumference of the cylinder, and
the second cutting line is in a direction intersecting the first cutting line.

2. The can for a rechargeable battery as claimed in claim 1, wherein the first cutting line and the second cutting line are portions that are thinner than other portions of the side portion, and optionally wherein the first cutting line and the second cutting line are grooves on inner or outer sides of the side portion.

3. The can for a rechargeable battery as claimed in any one of the preceding claims, wherein the first cutting line includes at least one cutting line.

4. The can for a rechargeable battery as claimed in any one of the preceding claims, wherein the second cutting line has a spiral shape along the outer circumference of the cylinder.

5. The can for a rechargeable battery as claimed in any one of the preceding claims, wherein the first handle includes a first portion affixed to the first cutting line and a second portion extending from the first portion, the second portion overlapping the side portion.

6. The can for a rechargeable battery as claimed in any one of the preceding claims, wherein the second handle includes a first portion affixed to the side portion and a second portion extending from the first portion, the second portion overlapping the side portion, and optionally wherein the second portion has a ring shape with a hole in the middle, one side of the second portion having a circular arc.

7. The can for a rechargeable battery as claimed in claim 6, wherein the second handle includes a first handle portion and a second handle portion on opposite sides of the cylinder.

8. The can for a rechargeable battery as claimed in claim 6 or claim 7, wherein a length of the first portion of the second handle is more than 30% of a diameter of the cylinder.

9. A rechargeable battery, comprising:
the can as claimed in any one of the preceding claims,
an electrode assembly accommodated within the can, and
a cap assembly installed in an opening of the can to seal the can.

10. The rechargeable battery as claimed in claim 9, wherein:
the can includes a beading portion in which the side portion is concavely deformed toward an inside of the can, and
the first cutting line is on the beading portion.

11. The rechargeable battery as claimed in claim 10, wherein:
a first portion of the first handle is on the beading portion, and
a second portion of the first handle is bent from the first portion, the second portion being on the side portion, and optionally wherein the first cutting line is cut from the beading portion by a force pulling the first handle, and
the second cutting line includes the side portion cut along the second cutting line by a force pulling the second handle.

12. The rechargeable battery as claimed in claim 11, wherein the first cutting line is a closed curved line along the beading portion, and optionally wherein if the first cutting line is completely removed, the cap assembly is completely separated from the side portion.

13. A disassembling method of a can for a rechargeable battery, the method comprising:
preparing a rechargeable battery including the can for the rechargeable battery of any one of claims 1 to 8;
lifting the first handle affixed to an outside of the can vertically to an outer surface of the can:
moving the first handle along a first cutting line to separate the can into an upper can portion and a lower can portion centered on the first cutting line;
lifting the second handle vertically to the outer surface of the can; and
pulling the second handle to cut a side portion along the second cutting line.

14. The disassembling method as claimed in claim 13, further comprising separating the can into an upper portion and a lower portion, the separating including separating a cap plate of the rechargeable battery from a side portion of the can, and optionally wherein cutting the side portion of the can is continuous from the upper can portion to the lower can portion.

15. The disassembling method as claimed in claim 13 or claim 14, wherein the second handle includes a first handle portion and a second handle portion, and wherein cutting the side portion of the can includes pulling the first handle portion and the second handle portion on opposite sides of the can simultaneously in opposite directions.
